# EUROPEAN PATENT APPLICATION

(11) **EP 1 881 667 A1**
(43) Date of publication of application: **23.01.2008**
(21) Application number: 06300809.8
(22) Date of filing: 17.07.2006
(51) Int. Cl.: H04L 29/06, H04N 7/173, H04N 7/56, H04L 29/08, H04N 7/54, H04L 12/18

(54) **Apparatus and method for presenting an event during a broadcast**

(71) Applicant: Motorola, Inc., A Corporation of the State of Delaware, Schaumburg, IL 60196 (US)
(72) Inventor: SEMET, Gaëtan, 31300, Toulouse (FR); PLACIARD, Edwin, 31000, Toulouse (FR)
(74) Representative: Joly, Jean-Jacques

(57) **Abstract**

A method and apparatus for presenting an event during a broadcast. Real time media broadcast content can be transmitted or received using a real time protocol via a transceiver. The real time media broadcast content can be output to a user. At least one presentation content message including content for presentation to a user can be transmitted or received. After transmitting or receiving the presentation content message an event trigger can be transmitted or received, the event trigger configured to trigger presentation of the content of the presentation content message in coordination with the real time media broadcast content. Content of the presentation content message can be presented to a user in response to receiving the event trigger.

## Description

### BACKGROUND

### 1. Field

The present disclosure is directed to a method and apparatus for presenting an event during a broadcast. More particularly, the present disclosure is directed to providing real time broadcast to users and providing an event for presentation during the broadcast.

### 2. Description of Related Art

Presently, Digital Video Broadcasting - Handheld (DVB-H) is a technical specification for bringing broadcast services to handheld receivers. DVB-H can offer a downstream channel at high data rates which can be used standalone or as an enhancement of mobile telecommunication networks that many typical handheld terminals are able to access. For example, DVB-H can be used to provide content, such as television shows, live events, and the like to wireless communication devices, such as mobile phones.

Currently, television shows may offer polls that allow viewers to vote in the poll, such as for a favorite performer in a contest, a political viewpoint, a best player in a sports match, or any other useful poll. Unfortunately, there is no method for effectively and efficiently synchronizing an event, such a poll or other presentation, to a broadcast for a wireless communication device. Thus, there is a need for a method and apparatus for presenting an event during a broadcast for a wireless communication device.

### SUMMARY

The present disclosure provides a method and apparatus for presenting an event during a broadcast for a wireless communication device. Real time media broadcast content can be transmitted or received using a real time protocol via a transceiver. The real time media broadcast content can be output to a user. At least one presentation content message including content for presentation to a user can be transmitted or received. After transmitting or receiving the presentation content message an event trigger can be transmitted or received, the event trigger configured to trigger presentation of the content of the presentation content message in coordination with the real time media broadcast content. Content of the presentation content message can be presented to a user in response to receiving the event trigger.

### BRIEF DESCRIPTION OF THE DRAWINGS

The embodiments of the present disclosure will be described with reference to the following figures, wherein like numerals designate like elements, and wherein:
Fig. I is an exemplary block diagram of a system according to one embodiment;
Fig. 2 is an exemplary block diagram of a wireless communication device according to one embodiment;
Fig. 3 is an exemplary message transfer timeline according to one embodiment;
Fig. 4 is an exemplary flowchart illustrating the operation of a wireless communication device according to one embodiment;
Fig. 5 is an exemplary flowchart illustrating the operation of a content provider according to one embodiment;
Fig. 6 is an exemplary flowchart illustrating the operation of a wireless communication device according to another embodiment;
Fig. 7 is an exemplary illustration of a presentation content message according to one embodiment; and
Fig. 8 is an exemplary illustration of an event trigger message according to one embodiment.

### DETAILED DESCRIPTION

Fig. I is an exemplary block diagram of a system 100 according to one embodiment. The system 100 can include a network 110, and a terminal 120, a content provider 130, a broadcaster 140, and a base station 150. The terminal 120 may be a wireless communication device, such as a wireless telephone, a cellular telephone, a personal digital assistant, a pager, a personal computer, a selective call receiver, or any other device that is capable of sending and receiving communication signals on a network including wireless network.

In an exemplary embodiment, the content provider 130 can include a media preparation module 132, a presentation preparation module 134, and a transceiver 136. The transceiver 136 can be a network connection, a wireless transceiver, or any other module for sending information. The transceiver 136 can be configured to send data on user datagram protocol ports using real time protocol. The content provider 130 can be connected to the network 110. The content provider 130 and the broadcaster 140 can be located in a network controller, at different locations, at the same location, or anywhere else on the network 110. The network 110 may include any type of network that is capable of sending and receiving signals. For example, the network 110 may include a wired communication network, such as optical fibers, a wireless telecommunications network, a cellular telephone network, a Time Division Multiple Access (TDMA) network, a Code Division Multiple Access (CDMA) network, a satellite communications network, and other like communications systems. Furthermore, the network 110 may include more than one network and may include a plurality of different types of networks. Thus, the network 110 may include a plurality of data networks, a plurality of telecommunications networks, a combination of data and telecommunications networks and other like communication systems capable of sending and receiving communication signals.

In operation, the content provider 130 can be a content provider server. The media preparation module 132 can prepare real time media broadcast content for transmission. The presentation preparation module 134 can prepare presentation content for presentation to a viewer. The transceiver 136 can transmit the real time media broadcast content using a real time protocol, transmit a presentation content message including the presentation content, and transmit an event trigger after transmitting the presentation content message. The event trigger can be configured to trigger presentation of the presentation content of the presentation content message in coordination with the real time media broadcast content.

The real time media broadcast content can be transmitted using at least one media real time protocol channel, such as the audio and/or video channel of the transceiver 136 and the presentation content message can be transmitted using an event real time protocol channel. The presentation content message can include an identifier and interactive presentation content to be synchronized with the real time media broadcast content. The event trigger can include the identifier for identifying the present content message with which the event trigger is associated. The transceiver 136 can be further configured to receive user input data in response to presenting the content of the presentation content message. The presentation module 134 can include a user input data processing module configured to process the user input data.

According to a related embodiment, the present disclosure can use Digital Video Broadcasting for Handheld (DVB-H), which is a unidirectional television broadcast system for handheld devices. The present disclosure can also use Internet Protocol (IP) Datacast over DVB-H, which is an end-to-end broadcast system for delivery of many types of digital content and services using IP-based mechanisms optimized for devices with limitations on computational resources and battery power. The IP Datacast system can comprise a unidirectional DVB broadcast path that may be combined with a bidirectional mobile/cellular interactive path. IP Datacast can be a platform that can be used for enabling the convergence of services from broadcast/media and telecommunications domains such as mobile/cellular communication. The IP Datacast can carry audio and/or video data over IP protocol. For a given program, media packets can be encapsulated using the Real Time Protocol (RTP) over User Datagram Protocol (UDP), which can include a timestamp to decode the data at the right moment. RTP can use a special encapsulation scheme depending on the format of the carried data. For example, the H.264 video codec can use Request For Comment (RFC) 3984, the Advanced Audio Codec can AAC use a different RFC, etc.

In DVB-H, audio and video can be sent from the content provider 130 though several RTP channels, on the same multicast IP address but on 2 different UDP ports. Synchronization can be performed using 2 extra channels, each providing Real Time Control Protocol (RTCP) Sender Report (SR) messages related to the corresponding audio or video channel. RTCP can be used in DVB-H to synchronize audio and video. For example, the RTCP SR can be used. This packet can be sent periodically from a sender, such as the content provider 130, to the terminal 120, such as in 2-5 second intervals. A RTCP packet can hold the absolute timing information for the related RTP stream, which can allow synchronizing every stream, such as audio, video, and data, to a unique wall clock, such as a network time reference.

Various information about the current broadcast program can be provided to a multimedia player on the terminal 120. For example, the multimedia player can parse a SDP file provided by the DVB-H system. This information can include the video codec, the audio codec, the IP address to listen to, the UDP port to listen to receive RTP video packets, such as port 5000 where the multimedia player can listen to the next port, such as port 5001 to receive RTCP SR packets related to the video stream, the UDP Port to listen to receive RTP audio packets, such as port 5002 where the multimedia player can listen to the next port, such as port 5003, to receive RTCP SR packets related to the audio stream, and the like.

In operation, a user can be consuming content on the terminal 120, such as a live presentation. The terminal 120 can receive a notification message related to the content being consumed and instructing the terminal 120 to render an event towards the user. The event can be interactive and can also be synchronized with the content being consumed. For example, the event might have to happen at a particular moment during the content presentation. The notification message can include media elements, plain text elements or both. This can allow for an interactive user experience. For example, a pop-up question form asking for a vote could be presented to the user during a live presentation. The event can be closely related to the live presentation, so it can be synchronized with the audio and video streams. Since DVB-H is typically unidirectional, the result for this event can be sent using another return link, such as using a General Packet Radio Service (GPRS) link, using a Universal Mobile Transport Service (UMTS) return link, using a Short Messaging Service (SMS) message, or using any other useful process for sending information.

The present disclosure solution can use the RTP protocol to both transfer the content presentation and to trigger its display for playback. RTP in DVB-H can be used to transfer audio and video content, and may also be adapted to transfer all event related data. The present disclosure can use a presentation content message and a trigger. The presentation content message can include the interactive content to be displayed to the user when the event is triggered. The content can include a still picture, plain text elements, media elements, hierarchical scene, or any other useful content. The trigger can start the display of the content presentation to the user.

The present disclosure can use an extra RTP channel along with the audio and video channels. For channel initialization, a Session Description Protocol (SDP) file describing a multimedia session or other configuration for the multimedia player can be used with extra data defining the use of the extra RTP channel. For example, the data can appear as:
m=application <port xxxx> udp <x-octet-stream MIME-Type>

Then, the multimedia player can open and start listening to these new ports and event related packets can be received through this channel. A RTCP SR packet can be used to synchronize this stream with the audio and video stream. If the terminal 120 is not compatible with this event session, the terminal 120 may not listen to the extra RTP ports. This can provide for compatibility with devices that do not include this feature.

When the content provider 130 wants to send an interactive session, the following three steps can be processed:
• Session initialization: During the first part, all files needed for the presentation, such as picture, video, text, etc., can be sent in a RTP channel depending of the format of the data. A limited carousel can be implanted for file transfer. The carousel does not need to use the RTP feature and can use the features provided by UDP on which RTP is based on. The presentation can be sent several times before being displayed in order to reduce the risk of corruption. An RTP timestamp may or may not be used, depending on the implementation of the network layer in the multimedia player. It is also not necessary to use an RTP sequence identifier.
• Trigger: An event trigger packet can be sent by the content provider exactly at the moment where the presentation should be displayed. The RTP timestamp feature can be used to synchronize the presentation with real time audio and video streams.
• Results: If the presentation generates data to be sent from the terminal 120 back to the content provider 130 or another source, the application can send the data using a telecommunications return link, SMS, or other data transfer method. The data may also be sent to a Uniform Resource Locator (URL). For example, for a telecommunications return link, an Internet connection can be set up using GPRS, UMTS, or the like, and a simple Hypertext Transfer Protocol (HTTP) post can be performed to the destination URL. This destination URL and the HTML form can be specified in the presentation content message. As another example, for SMS, the presentation content message can include a telephone number which can be used to send a SMS containing the result. The content provider can receive all results from the DVB-H terminals in real time and can be able to react in real time.

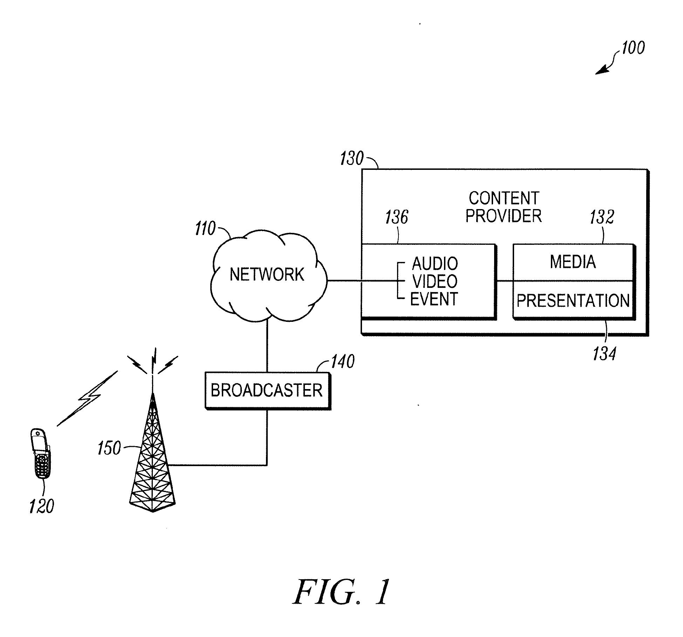

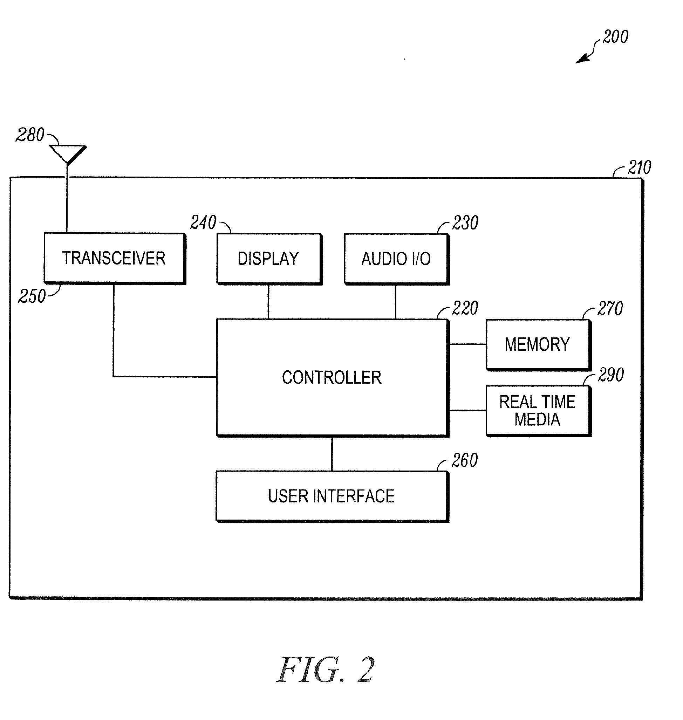

Fig. 2 is an exemplary block diagram of a wireless communication device 200, such as the terminal 120, according to one embodiment. The wireless communication device 200 can include a housing 210, a controller 220 coupled to the housing 210, media output such as audio input and output circuitry 230 and a display 240 coupled to the housing 210, a transceiver 250 coupled to the housing 210, a user interface 260 coupled to the housing 210, a memory 270 coupled to the housing 210, and an antenna 280 coupled to the housing 210 and the transceiver 250. The wireless communication device 200 can also include a real time media module 290. The real time media module 290 can be coupled to the controller 220, can reside within the controller 220, can reside within the memory 270, can be autonomous modules, can be software, can be hardware, or can be in any other format useful for a module on a wireless communication device 200.

The display 240 can be a liquid crystal display (LCD), a light emitting diode (LED) display, a plasma display, or any other means for displaying information. The transceiver 250 may include a transmitter and/or a receiver. The audio input and output circuitry 230 can include a microphone, a speaker, a transducer, or any other audio input and output circuitry. The user interface 260 can include a keypad, buttons, a touch pad, a joystick, an additional display, or any other device useful for providing an interface between a user and an electronic device. The memory 270 may include a random access memory, a read only memory, an optical memory, a subscriber identity module memory, or any other memory that can be coupled to a wireless communication device.

In operation, the wireless transceiver 250 can receive real time media broadcast content, receive a presentation content message, and receive an event trigger after receiving the presentation content message, the event trigger configured to trigger presentation of the presentation content message. The controller 220 can control the operations of the wireless communication device 200. The real time media module 290 can output the real time media broadcast content to a user of the wireless communication device 200 via the media output and present content of the presentation content message to a user via the media output in response to receiving the event trigger. The controller 220 can also present the content of the presentation content message synchronized with the real time media broadcast content using a timestamp reference clock. The real time media broadcast content can be received using at least one media real time protocol channel and the presentation content message can be received using an event real time protocol channel. The presentation content message can include an identifier and interactive presentation content to be synchronized with the real time media broadcast content. The event trigger can include the identifier for identifying the present content message with which the event trigger is associated. The user interface 260 and/or the audio input and output 230 can be a user input configured to receive user input data in response to presenting the content of the presentation content message. The transceiver 250 can transmit the user input data to a destination defined in the presentation content message.

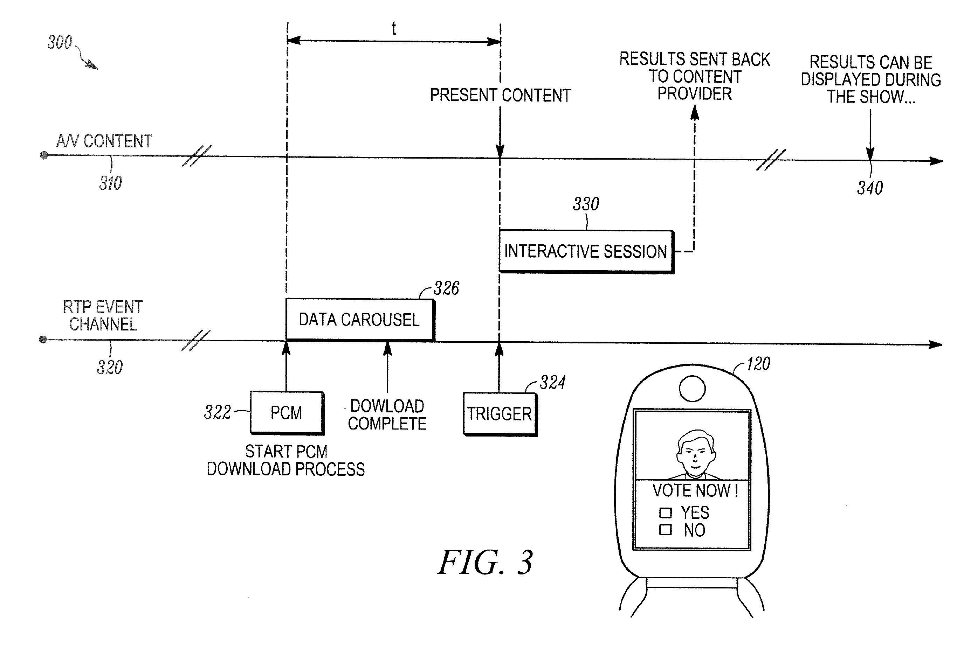

Fig. 3 is an exemplary message transfer timeline 300 according to one embodiment. Broadcast content can be transmitted on a real time media protocol channel 310. At least one presentation content message 322 for a presentation content package can be transmitted via a data carousel 326 and an event trigger 324 can be transmitted on an event real time protocol channel 320. The elapsed time (t) to transfer a complete presentation content package can be related to the bandwidth provided for the file transfer. The presentation content message 322 can be transmitted a set number of times. For example, the presentation content message 322 can be transmitted 1-10 times. The elapsed time t can include a delay after the presentation content package is transmitted to allow the terminal 120 enough time to parse and prepare the presentation content data before the trigger 324 is sent. When the trigger 324 is received by the terminal 120, the terminal 120 can present the content of the presentation content package. If the presentation content package is an interactive session 330, the results can be sent back to the content provider 130. The results can be displayed 340 during the presentation of the broadcast content.

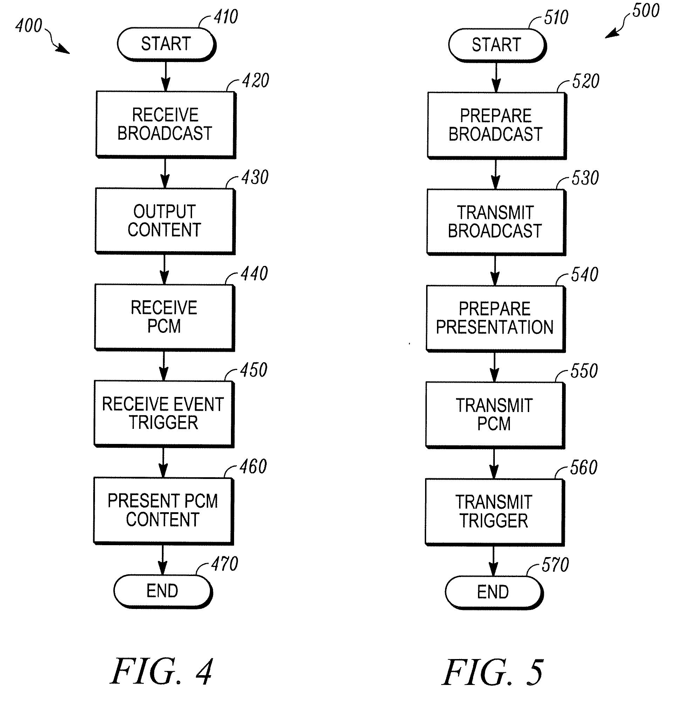

Fig. 4 is an exemplary flowchart 400 illustrating the operation of the wireless communication device 200 according to another embodiment. In step 410, the flowchart begins. In step 420, the wireless communication device 200 can receive real time media broadcast content using a real time protocol via a transceiver. In step 430, the wireless communication device 200 can output the real time media broadcast content to a user. In step 440, the wireless communication device 200 can receive at least one presentation content message including content for presentation to a user. In step 450, the wireless communication device 200 can receive an event trigger after receiving the presentation content message, the event trigger configured to trigger presentation of the content of the presentation content message in coordination with the real time media broadcast content. In step 460, the wireless communication device 200 can present content of the presentation content message to a user in response to receiving the event trigger. The wireless communication device 200 can present the content of the presentation content message synchronized with the real time media broadcast content using a timestamp reference clock. The real time media broadcast content can be received using at least one media real time protocol channel. The presentation content message can be received using an event real time protocol channel. The presentation content message can include an identifier and interactive presentation content to be synchronized with the real time media broadcast content. The event trigger can include the identifier for identifying the present content message with which the event trigger is associated. After presenting the content of the presentation content message, in step 460, the wireless communication device 200 can receive user input data in response to presenting the content of the presentation content message and transmit the user input data to a destination defined in the presentation content message. In step 470, the flowchart 400 can end.

Fig. 5 is an exemplary flowchart 500 illustrating the operation of the content provider 130 according to another embodiment. In step 510, the flowchart begins. In step 520, the content provider 130 can prepare real time media broadcast content for transmission. In step 530, the content provider 130 can transmit the real time media broadcast content using a real time protocol, In step 540, the content provider 130 can prepare presentation content for presentation to a viewer. In step 550, the content provider 130 can transmit a presentation content message including the presentation content. In step 560, the content provider 130 can transmit an event trigger after transmitting the presentation content message, the event trigger configured to trigger presentation of the presentation content of the presentation content message in coordination with the real time media broadcast content. The event trigger can include information for synchronizing presenting content of the presentation content message with the real time media broadcast content using a timestamp reference clock. The real time media broadcast content can be transmitted using at least one media real time protocol channel. The presentation content message can be transmitted using an event real time protocol channel. The presentation content message can include an identifier and presentation content to be synchronized with the real time media broadcast content. The presentation content message can also include interactive presentation content to be synchronized with the real time media broadcast content. The event trigger can include the identifier for identifying the present content message with which the event trigger is associated. After transmitting the even trigger, in step 560, the content provider 130 can receive user input data in response to presenting the content of the presentation content message. In step 570, the flowchart 500 can end.

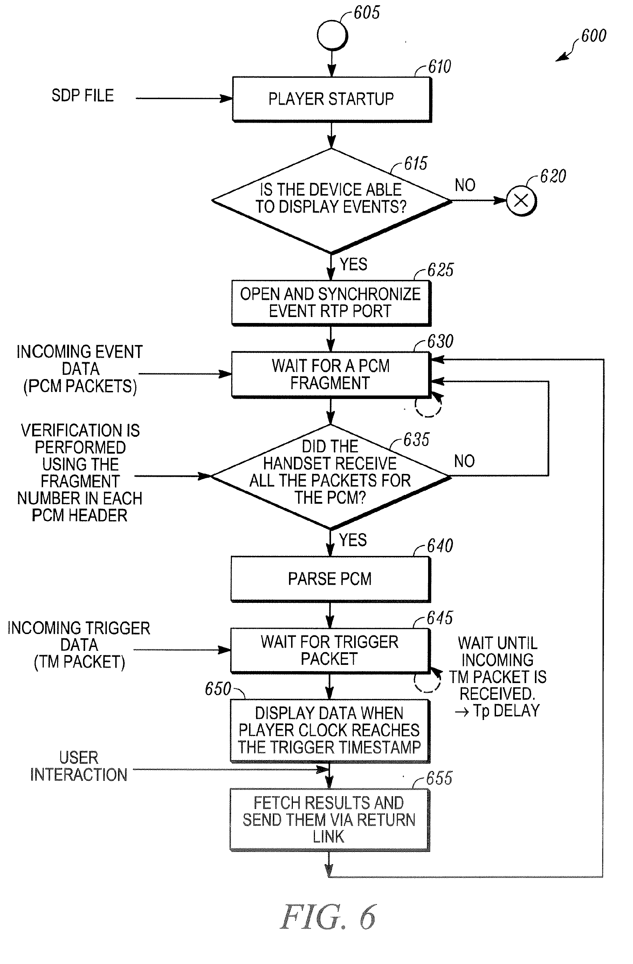

Fig. 6 is an exemplary flowchart 600 illustrating the operation of a wireless communication device 200 according to another embodiment. In step 605, the flowchart begins. In step 610, a multimedia player on the wireless communication device 200 can start up in response to or for receiving a SDP file. In step 615, the wireless communication device 200 determines if it is able to display events. If not, in step 620, the flowchart ends and the wireless communication device 200 processes broadcast content without events. If the device can display events, in step 625, the wireless communication device 200 can open and synchronize an event RTP port. In step 630, the wireless communication device 200 can wait for presentation content messages/packets. This can be done while displaying broadcast media content. In step 635, the wireless communication device 200 can determine if it has received all the packets/messages for the presentation. This can be done using verification according to the fragment number in each presentation content message header. If all of the presentation content message packets have not been received, the wireless communication device 200 can continue to receive presentation content messages in step 630. In step 640, the wireless communication device 200 can parse the presentation content messages. In step 645, the wireless communication device 200 can wait for the trigger message packet. The wireless communication device 200 can continue playing broadcast media content while waiting for the trigger message packet. In step 650, the wireless communication device 200 can display the presentation content when the multimedia player clock reaches a trigger timestamp in the trigger message. If the presentation is an interactive presentation and a user of the wireless communication device 200 enters data, in step 655, the wireless communication device 200 can receive the data and send it via a return link to a content provider. The flowchart 600 can then return to step 630 to wait for any other possible presentation events while playing broadcast media content.

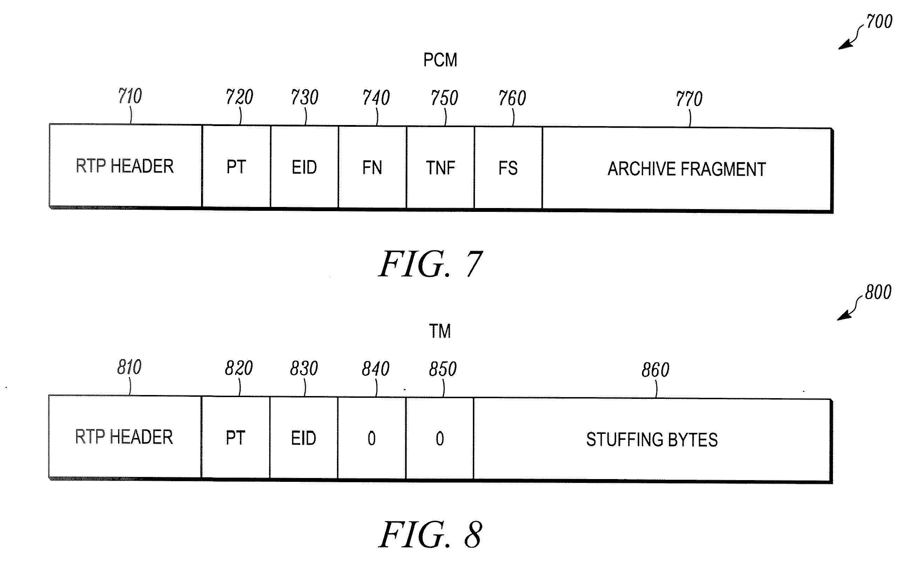

Fig. 7 is an exemplary illustration of a presentation content message 700 according to one embodiment. The presentation content message 700 can be encapsulated in one or several RTP packets. A header field 710 can be used with the raw presentation data. Each RTP packet of the fragmented Presentation Content Message can carry a header field. The header field can include the packet type (PT) 720, which can be either "Presentation Content Message" or "Trigger Message." Thus, obviously, the "Presentation Content Message" packet type can be used for a presentation content message packet. The header field can also include an Event Unique Identifier (EID) 730, which can be a random number that identifies the event. The header field can also include a fragment number (FN) 740 that can specify the current fragment number for a fragmented message, such as a presentation content message that is broken up into several RTP packets. The header field can also include a total number of fragments (TNF) field 750, which can be a I in the case of a single packet, or more in the case of a fragmented presentation content message. The header field can additionally include a fragment size (FS) field 760 that can indicate the size in bytes of the archive fragment 770 in the rest of the RTP payload. The two fields FN 740 and TNF 750 can easily allow putting a PCM over multiple RTP packets in case the archive is greater than allowed in a normal packet. Such RTP packets can use the same timestamp. Fragment verification can use a UDP checksum to verify the integrity of the packet, and the complete RTP data can be discarded in the case of a detected corruption in the data transmission. The raw presentation format can be a binary archive, such as ZIP, GUNZIP, or the like, that can contain containing an XML file, media files, such as pictures, sounds, texts, etc., and the like. This can decrease the amount of data sent on the network. Other formats can be used according to the desires of the content provider. For example, the root XML file may be named "presentation.xml" and can contain the information on the presentation session. A SMIL-like syntax may be used. The decompressing of the archive, XML parsing and pre-rendering can be performed in the background without altering terminal audio/video performances. At maximum, if the PCM is completely received in the first file transfer, it can let (n-1)*t + tp seconds to the device to prepare the data, where "tp" can represent a time delay and "n" can represent the number of packets. If the data is not ready when the trigger message is received, the display of the event can be delayed until the presentation is ready.

Fig. 8 is an exemplary illustration of an event trigger message 800 according to one embodiment. A header field 810 can be used with the raw presentation data. The header field can include the packet type (PT) 820, which can be either "Presentation Content Message" or "Trigger Message." In this case the packet type 820 can indicate a "Trigger Message" packet type. The header field can also include an Event Unique Identifier (EID) 830, which can be a random number that identifies the event and can be the same identifier as the presentation content message(s) with which it is associated. Because the trigger message 800 is typically a single message, the fragment number (FN) 840 field and the total number of fragments (TNF) field 850 can be set to zero if unused or I to indicate a single packet. Also, because the trigger message may be a constant size, it may be unnecessary to include a fragment size field. Alternately, a fragment size field may be included for consistency in packet headers and/or if the size of the packet may vary. The trigger message 800 can also include stuffing bytes that may include data that indicates a time to present the presentation content and that may also fill out the trigger message 800.

The present disclosure thus provides synchronization of presentation content with the audio and video stream which can be performed by the multimedia player, using the RTP/RTCP protocol itself. This can provide a simple solution because synchronization can be inherent to the RTP protocol. No extra synchronization source is necessarily needed. Also, sending the presentation file before it is displayed can allow for sending heavy or large presentation content, such as pictures, video clips, vector graphics, etc. transparently. The content provider 130 can adjust the number of file transfers and the delay between reception and presentation depending on the heaviness of the presentation event session.

The file used for the presentation can include numerous features. For example, it can be an XML file that describes the presentation, such as position of text, multimedia data, clips, and the like. It can also include the position and type of information the user will provide where each field can be characterized by an identifier, such as an information ID. It can also include a radio button for a poll, a text field, and other information. It can further include return link information. For example, return link information can include a SMS telephone number and the file can contain the format of the message to be sent. For example, return link information can also include an email address, or a URL, such as http://www.contentprovider.com/dvbh-proxy/receivedata.xml?post,where information can be sent using a HTTP post protocol and form data can be described in the file as well. The communication of the result to the server, such as at the content provider 130, can use a telecommunications link, SMS, or other means. The multimedia engine can implement this communication, a proxy application can be used, or other means can be used for communicating the result. For example, for live broadcasting, the results can be used and displayed in the program itself, after a processing the results.

The present disclosure can allow for reduced power consumption because the event information is sent using a RTP link, so it can be available in the same timeslice as the audio and video data. The DVB-H system does not need to be tuned to another channel from the current one.

Therefore, the present disclosure can allow the content provider 130 to be completely in control of formatting, sending the presentation, triggering its display and processing the result. The presentation content message can be transparent with multimedia players that do not support this feature. The presentation content message can be synchronous with the video/audio stream and closely related to the content. The presentation content message can also be reliable because the content can be sent several times before being triggered. Additionally, the content provider 130 can react immediately to the result. Furthermore, the process can avoid useless code complexity in time management.

The method of this disclosure is preferably implemented on a programmed processor. However, the controllers, flowcharts, and modules may also be implemented on a general purpose or special purpose computer, a programmed microprocessor or microcontroller and peripheral integrated circuit elements, an ASIC or other integrated circuit, a hardware electronic or logic circuit such as a discrete element circuit, a programmable logic device such as a PLD, PLA, FPGA or PAL, or the like. In general, any device on which resides a finite state machine capable of implementing the flowcharts shown in the Figures may be used to implement the processor functions of this disclosure.

While this disclosure has been described with specific embodiments thereof, it is evident that many alternatives, modifications, and variations will be apparent to those skilled in the art. For example, various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the disclosure by simply employing the elements of the independent claims. Accordingly, the preferred embodiments of the disclosure as set forth herein are intended to be illustrative, not limiting. Various changes may be made without departing from the spirit and scope of the disclosure.

In this document, relational terms such as "first," "second," and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that comprises the element. Also, the term "another" is defined as at least a second or more. The terms "including," "having," and the like, as used herein, are defined as "comprising."

## Claims

1. A method comprising:
receiving real time media broadcast content using a real time protocol via a transceiver;
outputting the real time media broadcast content to a user;
receiving at least one presentation content message including content for presentation to a user;
receiving an event trigger after receiving the presentation content message, the event trigger configured to trigger presentation of the content of the presentation content message in coordination with the real time media broadcast content; and
presenting content of the presentation content message to a user in response to receiving the event trigger.

2. The method according to claim 1, wherein presenting content of the presentation content message is synchronized with the real time media broadcast content using a timestamp reference clock.

3. The method according to claim 1,
wherein the real time media broadcast content is received using at least one media real time protocol channel, and
wherein the presentation content message is received using an event real time protocol channel.

4. The method according to claim 1, wherein the presentation content message comprises an identifier and interactive presentation content to be synchronized with the real time media broadcast content.

5. The method according to claim 1,
wherein the presentation content message comprises an identifier and presentation content, and
wherein the event trigger includes the identifier for identifying the present content message with which the event trigger is associated.

6. The method according to claim 1, further comprising:
receiving user input data in response to presenting the content of the presentation content message; and
transmitting the user input data to a destination defined in the presentation content message.

7. A method comprising:
preparing real time media broadcast content for transmission;
transmitting the real time media broadcast content using a real time protocol;
preparing presentation content for presentation to a viewer;
transmitting a presentation content message including the presentation content; and
transmitting an event trigger after transmitting the presentation content message, the event trigger configured to trigger presentation of the presentation content of the presentation content message in coordination with the real time media broadcast content.

8. The method according to claim 7, wherein the event trigger includes information for synchronizing presenting content of the presentation content message with the real time media broadcast content using a timestamp reference clock.

9. The method according to claim 7,
wherein the real time media broadcast content is transmitted using at least one media real time protocol channel, and
wherein the presentation content message is transmitted using an event real time protocol channel.

10. The method according to claim 7, wherein the presentation content message comprises an identifier and presentation content to be synchronized with the real time media broadcast content.

11. The method according to claim 7, wherein the presentation content message comprises an identifier and interactive presentation content to be synchronized with the real time media broadcast content.

12. The method according to claim 7,
wherein the presentation content message comprises an identifier and presentation content, and
wherein the event trigger includes the identifier for identifying the present content message with which the event trigger is associated.

13. The method according to claim 7, further comprising receiving user input data in response to presenting the content of the presentation content message.

14. A communication device, comprising:
a housing;
a media output coupled to the housing;
a transceiver coupled to the housing, the wireless transceiver configured to receive a real time media broadcast content, to receive a presentation content message, and to receive an event trigger after receiving the presentation content message, the event trigger configured to trigger presentation of the presentation content message;
a controller coupled to the wireless transceiver and coupled to the media output, the controller configured to control the operations of the wireless communication device; and
a real time media module coupled to the controller, the real time media module contigured to output the real time media broadcast content to a user of the wireless communication device via the media output and configured to present content of the presentation content message to a user via the media output in response to receiving the event trigger.

15. The communication device according to claim 14, wherein the media output comprises a display and a speaker.

16. The communication device according to claim 14, wherein the controller is configured to present the content of the presentation content message synchronized with the real time media broadcast content using a timestamp reference clock.

17. The communication device according to claim 14,
wherein the real time media broadcast content is received using at least one media real time protocol channel, and
wherein the presentation content message is received using an event real time protocol channel.

18. The communication device according to claim 14,
wherein the presentation content message comprises an identifier and interactive presentation content to be synchronized with the real time media broadcast content, and
wherein the event trigger includes the identifier for identifying the present content message with which the event trigger is associated.

19. The communication device according to claim 14, further comprising a user input configured to receive user input data in response to presenting the content of the presentation content message,
wherein the transceiver is configured to transmit the user input data to a destination defined in the presentation content message.

20. A content provider server comprising:
a media preparation module configured to preparing real time media broadcast content for transmission;
a presentation preparation module configured to prepare presentation content for presentation to a viewer;
a transceiver coupled to the media preparation module and the presentation preparation module, the transceiver configured to transmit the real time media broadcast content using a real time protocol, to transmit a presentation content message including the presentation content, and to transmit an event trigger after transmitting the presentation content message, the event trigger configured to trigger presentation of the presentation content of the presentation content message in coordination with the real time media broadcast content.

21. The content provider server according to claim 20,
wherein the real time media broadcast content is transmitted using at least one media real time protocol channel, and
wherein the presentation content message is transmitted using an event real time protocol channel.

22. The content provider server according to claim 20, wherein the presentation content message comprises an identifier and interactive presentation content to be synchronized with the real time media broadcast content, and
wherein the event trigger includes the identifier for identifying the present content message with which the event trigger is associated.

23. The content provider server according to claim 20, wherein the transceiver is further configured to receive user input data in response to presenting the content of the presentation content message, and wherein the content provider server further comprises a user input data processing module configured to process the user input data.
